(19) Europäisches Patentamt / European Patent Office / Office européen des brevets

(11) **EP 4 764 604 A1**

(12) **EUROPEAN PATENT APPLICATION**

(43) Date of publication:
**24.06.2026  Bulletin 2026/26**

(21) Application number: **24223057.1**

(22) Date of filing: **23.12.2024**

(51) International Patent Classification (IPC):
**G01S 11/02** (2010.01)    **G01S 19/22** (2010.01)

(52) Cooperative Patent Classification (CPC):
**G01S 5/0218; G01S 5/0244;** G01S 11/02;
G01S 19/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Stichting IMEC Nederland
5656 AE Eindhoven (NL)**

(72) Inventor: **MARSHALL, Chris
5581 CM Waalre (NL)**

(74) Representative: **Sarlet, Stephanie
Pitch Patents BV
Vinkenstraat 10
2440 Geel (BE)**

(54) **COMPUTER-IMPLEMENTED METHOD, SYSTEM, AND COMPUTER PROGRAM PRODUCT FOR TOA OR DISTANCE ESTIMATION BETWEEN WIRELESS SYSTEMS**

(57)   A computer-implemented method for estimating a Time of Arrival, ToA, or a distance between two wireless systems, based on a received signal communicated between the two wireless systems in a close-in multipath environment, wherein at least one signal is transmitted from a first of the wireless systems and signal resultants are received on a second of the wireless systems via different ports, the method comprising: obtaining a set of measurements on the signal resultants with respect to a timing reference; determining an aggregation-based metric based on an aggregation of the set of measurements; determining a selection-based metric based on a selection of a presumed earliest measurement among the set of measurements; and determining an overall ToA estimate or an overall distance estimate based on a combination of the aggregation-based metric and the selection-based metric.

Fig. 1

**Description**

**Field of the disclosure**

The present disclosure relates to a computer-implemented method, system, and computer program product for estimating a Time of Arrival, ToA, or a distance between two wireless systems, based on one or more signals communicated between the two wireless systems in a close-in multipath environment, based on measurements on received signals such as for example ToA measurements, or High Accuracy Distance Measurements, HADM.

**Background art**

In many wireless communication systems, such as Ultra-Wideband (UWB) systems, Bluetooth systems, and cellular systems, the ToA of a signal is used to estimate the distance between a transmitter and a receiver. However, in close-in multipath environments, where the signal is reflected off nearby surfaces, the ToA measurement can be affected by the multipath components, leading to errors in the distance estimation.

In a close-in multipath environment, the signal arrives at the receiver via multiple paths, including the direct path and one or more multipath components. The multipath components are caused by reflections off nearby surfaces, such as walls, ceilings, and floors, and can arrive at the receiver with a delay compared to the direct path. The delay of the multipath components can be small compared to the uncertainty of the ToA measurement, making it difficult or even impossible to separate the multipath components from the direct path. Another factor that affects accuracy is measurement uncertainty (e.g. signal to noise ratio).

For communication purposes in multipath conditions, a known technique is to employ diversity, for example to use a number of antennas, to measure different combinations of the propagation paths. A standard method of combining the measurements of multiple receive channels is some form of averaging, possibly weighted inversely according to the uncertainty in each measurement. This works well for communication purposes, because for communication the absolute time of arrival is not important. It has been found, however, that this known technique is insufficiently accurate for distance measurements, especially in close-in multipath conditions.

X. Li and K. Pahlavan, "Super-Resolution TOA Estimation With Diversity for Indoor Geolocation," IEEE Transactions on Wireless Communications, vol. 3, no. 1, pp. 224-234, Jan. 2004, discloses frequency-domain super-resolution time-of-arrival estimation techniques for indoor geolocation applications. The study evaluates the performance of super-resolution techniques compared to conventional TOA estimation methods, particularly under challenging indoor multipath conditions. The authors explore the impact of diversity techniques on enhancing TOA estimation accuracy.

**Summary of the disclosure**

It is an aim of the present disclosure to provide an improved computer-implemented method, system, and computer program product for estimating a ToA or a distance between two wireless systems in a close-in multipath environment, for example for improving accuracy or robustness of such estimations.

Aspects of the present disclosure relate to a computer-implemented method, system, and computer program product for estimating a Time of Arrival, ToA, or a distance between two wireless systems, based on at least one signal communicated between the two wireless systems in a close-in multipath environment, wherein at least one signal is transmitted from a first of the wireless systems and signal resultants are received on a second of the wireless systems via different ports, wherein the method comprises: obtaining a set of measurements on the signal resultants with respect to a timing reference; determining an aggregation-based metric based on an aggregation of the set of measurements; determining a selection-based metric based on a selection of a presumed earliest measurement among the set of measurements; determining a distance estimate based on a combination of the aggregation-based metric and the selection-based metric.

The inventor has found that for high accuracy and robustness of distance estimations in close-in multipath environments, aggregation-based metrics alone, such as calculating a mean or median of the measurements, are insufficient. The inventor has found that using an aggregation-based metric may introduce a positive bias in the distance estimation, due to a delay of the (inseparable) multipath components in the received signal resultant compared to the direct path. The inventor has further found that using a selection-based metric, such as selecting the presumed earliest signal resultant or presumed earliest measurement among the measurements may introduce a negative bias in the distance estimation. In close-in multipath conditions, it may occur for example that the presumed earliest signal resultant is not the direct path. Thus, the inventor has found that by making a combination of the aggregation-based metric and the selection-based metric, preferably a balanced or weighted combination, accuracy and robustness of the distance estimation may be improved. Surprisingly, it has been found that when the measurements are relatively close to each other the measurement uncertainty may actually be improved by the contribution of the second measurement.

In embodiments, the aggregation-based metric may be an "averaging metric" such as an average, mean, weighted mean, mode, or median of the set of measurements.

In embodiments, the selection-based metric measurement may for example be based on the presumed earliest of the set of measurements..

In embodiments, the overall time of arrival estimate may be determined based on a weighted combination of the aggregation-based metric and the selection-based metric.

In embodiments, the method may comprise determining or defining a measurement uncertainty for each measurement and the weighted combination may be weighted based on said measurement uncertainties. Preferably, the aggregation-based metric is given more weight for higher measurement uncertainties and the selection-based metric is given more weight for lower measurement uncertainties.

In embodiments, the method may comprise determining a relative separation between the signal resultants and the weighted combination may be weighted based on said relative separation. Preferably, the aggregation-based metric is given more weight for smaller relative separations and the selection-based metric is given more weight for larger relative separations.

In embodiments, the step of determining the distance estimate may comprise determining a function of the aggregation-based metric and the selection-based metric that takes into account the relative separation between the measurements and their measurement uncertainties. Preferably, the function comprises a ratio of the relative separation between the measurements to the sum of their measurement uncertainties.

In embodiments, it may be assumed that measurement errors in the receiver system follow a Gaussian distribution, wherein the standard deviation of the measurement errors may be used to estimate measurement uncertainties of the measurements.

In embodiments, the measurements may be ToA measurements. For example, the ToA measurement may be based on detection of one of the following parameters of the signal resultants: peak amplitude, point of crossing a threshold, phase with respect to the timing reference, or other.

In embodiments, the measurements may be distance measurements. For example, the distance measurements may be based on detection of one of the following parameters of the signal resultants: round trip time of arrival, round trip HADM using a set of phase measurements.

In embodiments, the measurements may be one or more ToA measurements on a first port and one or more distance measurements on a second port.

In embodiments, the transmitted signal may be an UWB signal, a Bluetooth signal, an ISM band signal, a cellular signal, or a GNSS signal.

In embodiments, the transmitted signal may be a predetermined ranging signal, such as a known signal pattern or a known pulse shape.

Aspects of the present disclosure relate to a receiver system comprising a processing unit configured for executing the method according to any embodiment disclosed herein.

Aspects of the present disclosure relate to a computer program product comprising a non-transitory computer-readable medium having instructions stored thereon, which when executed by a processing unit, cause the processing unit to perform the method according to any embodiment disclosed herein.

## Brief description of the drawings

Embodiments of the present disclosure will be discussed in more detail below, with reference to the attached drawings.

Fig. 1 shows a system architecture wherein embodiments according to the disclosure may be implemented.

Fig. 2 shows an example of an aggregation-based metric.

Fig. 3 shows an example of a selection-based metric.

Fig. 4 shows an example of a balanced combination of an aggregation-based metric and a selection-based metric.

Fig. 5 shows a flowchart of an embodiment of a method according to the disclosure.

Fig. 6 a graph of a Student's test to assess the balanced estimation method of the embodiment of Fig. 5.

Figs. 7 and 8 show simulation results to illustrate the behaviour of the balanced estimation method of Fig. 5.

Fig. 9 shows a flowchart of another embodiment of a method according to the disclosure to combine multiple measurements.

Figs. 10 and 11 illustrate the process according to the embodiment of Fig. 9.

Figs. 12-17 show curves illustrating a further embodiment according to the disclosure, respectively showing the weighting curve, and the probability density function and cumulative density function for different measurement uncertainties.

**Description of embodiments**

As used herein, the term "close-in multipath environment" is intended to mean an environment with dense multipath conditions to the extent that multipath components resulting from reflections of a transmitted signal may overlap with and/or distort the direct path of the transmitted signal. Then it is difficult to separate the multipath components from the direct path signal, making distance estimation between wireless systems in the environment challenging. This may for example occur when the additional delay of a multipath component is small (e.g. less than 100, 50, 30, 10, 3 or 1 nanoseconds; for example less than 3 ns in case of UWB signals; for example less than 30 ns in case of Bluetooth, ISM, cellular or GGNS signals) in comparison to the uncertainty in the measurement and the bandwidth of the channel - determined by the bandwidth of the transmitted signal, and of the filtering in receiver. Close-in multipath can arise from:

- reflections and scattering from walls, ceiling, floor on the paths between transmitter and receiver, particularly for example from reflections from the wall or ceiling on which the anchor is mounted;
- reflections and scattering from objects and equipment in the environment, and from users;
- resonances in the equipment in which the transmitter and receiver are fitted.

As used herein, the term "measurement uncertainty" refers to the doubt or variability that may exist in the measurement of a received signal's characteristics, such as its amplitude, phase, or time delay. Measurement uncertainty in this context can arise from various sources, including but not limited to: limited resolution of the measurement equipment or technique; timing errors; noise and other forms of interference; errors in the transmitter, for example in its timing, or variability in the characteristics of the transmitted signal (waveform, phase...). Measurement uncertainty can be quantified using statistical methods, such as calculating the standard deviation or confidence intervals of the measured values.

Measurement uncertainty models: to quantify the measurement uncertainty, various models can be employed, including:

- Gaussian Distribution: Assuming that the timing errors follow a Gaussian distribution, the standard deviation of the timing errors can be used to estimate the measurement uncertainty.
- Rayleigh Distribution: In the presence of multipath components, the received signal can be modeled as a Rayleigh distribution. The standard deviation of the Rayleigh distribution can be used to estimate the measurement uncertainty.
- Monte Carlo Simulations: Monte Carlo simulations can be used to estimate the measurement uncertainty by generating multiple realizations of the received signal and calculating the ToA for each realization.

As used herein, the term "relative separation" (or relative delay) refers to the time difference between the arrival times of a direct signal and its multipath components at a receiver. In other words, the relative separation is the time delay between the line-of-sight (LOS) signal and the signal that has been reflected or scattered by nearby objects, such as buildings, hills, or other structures. This delay can cause distortion in the received signal, leading to errors in signal detection and decoding. The relative separation is typically measured in terms of the difference in path lengths between the direct and multipath signals, and is often expressed in units of time (e.g., nanoseconds) or distance (e.g., meters). In a close-in multipath environment, the multipath components arrive very close in time to the direct path signal, typically within a few nanoseconds. Therefore, the separation between ToA measurements is typically very small, on the order of nanoseconds or even picoseconds. For example, in a typical indoor environment, the separation between ToA measurements might be on the order of 1-10 nanoseconds.

As used herein, the term "port" refers to a particular combination of a transmitter antenna, a receiver antenna and a signal frequency and bandwidth.

As used herein, the term "signal resultant" is used to refer to the resultant of a transmitted signal, that is transmitted from a transmitting system to a receiving system in the close-in multipath environment via a port. The signal resultant may contain the energy of the direct path and one or more multipath components, inseparable from each other.

Embodiments of the present disclosure provide a method and system for estimating the ToA of a signal, and/or the distance between two wireless systems, in a multipath environment, in particular a close-in multipath environment. The method combines multiple ToA measurements and/or distance measurements using an aggregation-based metric and a selection-based metric, with the combination preferably being weighted based on the relative separation between the measurements and/or their measurement uncertainties. This approach ensures that the bias of the overall estimator is balanced and close to zero, leading to more accurate and robust ToA or distance estimates.

System Architecture

The system comprises two wireless systems, e.g. a transmitter and a receiver, and a propagation channel. The transmitter may have multiple antennas, and the receiver may also have multiple antennas. The system may operate at multiple signal frequencies. Each combination would give a corresponding propagation channel between transmitter and receiver, the measurement of which being made at a "port." The receiver makes a ToA measurement or a distance measurement for each port and hence for each channel, and the measurements are combined to estimate the ToA of the direct path or the distance between the two wireless systems.

To determine the Time of Arrival measurement for a port, for example the following methods may be used:

- Peak detection: identify the first significant or distinguishable peak in the received signal, which may correspond to the direct path (line-of-sight) or the first multipath component, and extract its ToA.

- Energy-based approach: calculate the energy of the received signal over time. The component with the highest energy or which has the earliest time at which its energy crosses a threshold could be considered the presumed earliest measurement, and its ToA extracted.

- Cyclostationary analysis: analyze the cyclostationary properties of the received signal. The first multipath component is typically the one with the strongest cyclostationary feature.

- Machine learning-based approach: train a machine learning model to identify the first multipath component based on the received signal characteristics, and extract its ToA

To determine the distance measurement for a port and channel, for example a round trip method may be used, as known in the state or the art.

It is advantageous to use the diversity in the multiple ports and multiple channels to improve the estimate of the Time of Arrival or distance, by using the multiple measurements to make the estimate of the ToA or distance more robust against the effects of close-in multipath.

Aggregation-Based Metric and Selection-Based Metric

The aggregation-based metric is a measure that combines the ToA/distance measurements from multiple ports. Common aggregation-based metrics include the mean, weighted mean, mode, and median of the ToA/distance measurements. The weighted mean is particularly useful, as it may give more weight to measurements with lower uncertainty.

The selection-based metric is a measure that selects the presumed earliest ToA/distance measurement from the set of measurements. The selection-based metric is useful because it is less likely to be affected by late-arriving multipath components, but it can introduce a negative (early) bias.

The present disclosure combines the aggregation-based metric and the selection-based metric to estimate the ToA of the direct path / the distance between the wireless systems. The combination may be weighted based on the relative separation between the measurements and/or their measurement uncertainties. The relative separation may be defined as the ratio of the separation between the measurements to the sum of their measurement uncertainties. For smaller relative separations, the aggregation-based metric may be given more weight, while for larger relative separations, the selection-based metric may be given more weight.

The measurement uncertainty for each measurement is an important factor in the combination of the metrics. The uncertainty may be estimated from the signal-to-noise ratio, SNR, of the input signal and the design of the receiver. Herein, the uncertainty may be used to influence the weight given to each measurement in the aggregation-based metric and the overall combination.

**Exemplary embodiment 1**

In the following, a preferred embodiment according to the disclosure will be described, wherein the measurements are ToA measurements. The present disclosure is however not limited thereto.

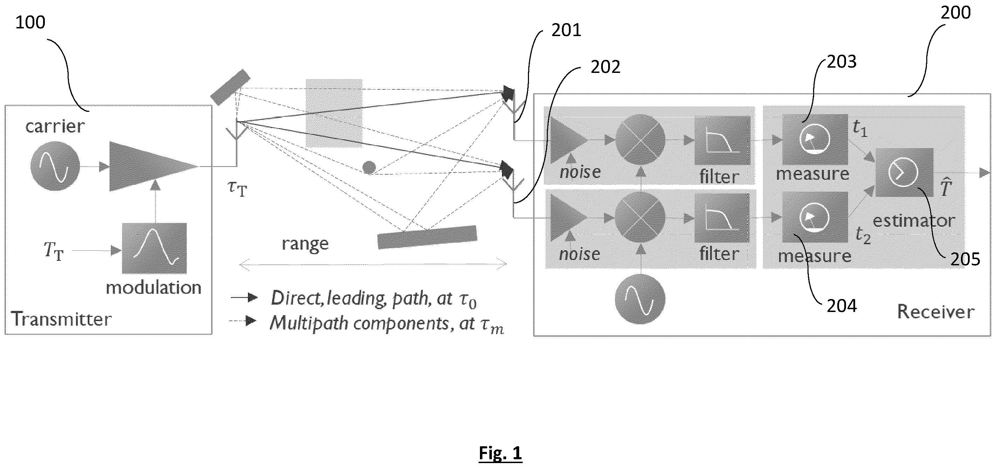

In a particular embodiment, we assume a transmitter 100 and a receiver 200 that support a number of measurement ports providing a set of measurements with channel diversity. An example for a receiver with two antennas 201, 202 is shown in Fig. 1. The measurements $t_1$, $t_2$ from the two ports 203, 204 are made with respect to a local timing reference (local clock or local oscillator) in the receiver, and the objective is to find a robust way of combining them to estimate the time of arrival of the direct path $\hat{T}$, and thereby determine the distance between the transmitter 100 and the receiver 200. A localization application may use the obtained estimate from the estimator 205 and other measurements to establish location information, for example using a round-trip transmission sequence to establish the transmit times, propagation delay, and the range, $d_0$.

The present disclosure is concerned with how the obtained measurements $t_1$, $t_2$, which may be ToA measurements according to a measurement method that is as such known to the skilled person, for each channel port 203, 204 should be combined to an overall estimate. The combination may take into account that the individual measurements are likely to suffer from the effects of measurement uncertainty due to a.o. the receiver, and of variability due to the channel propagation.

Principle of operation

Consider for simplicity the case when the receiver 200 has two antenna ports 201, 202 and two measurements 203, 204 available, each with a known uncertainty: measurement $t_1$ with uncertainty $\sigma_1$ and measurement $t_2$ with uncertainty $\sigma_2$. The "first" of these measurements is denoted $t'$. Next, information about the measurements is extracted by estimating the mean (which is likely to have a delay bias) and by finding the "first" or "presumed earliest" measurement (which is likely to have an early bias), and then combine these by weighting them to produce a balanced estimation with reduced overall bias. The main interest is in estimating the direct path. However, the presence of later measurements at another receiver port may well have an influence on the time of arrival estimate for the direct path, as described below.

More generally, the system comprises a transmitter, a receiver and a propagation channel from transmitter to receiver. The transmitter may have multiple antennas, the receiver also, and the system may operate at a number of signal frequencies. The antennas may be in different locations (for example for Angle of Arrival measurement in the receiver, or Angle of Departure measurement in the transmitter) point in different directions or have different polarizations (for diversity). The receiver has $N$ ports, and for each particular port $i$ (combination of transmitter antenna, receive antenna and frequency) the channel between transmission and reception, in absolute time $\tau$, can be regarded as

$$h_i(\tau) = \sum_{m=0}^{M} a_{m,i}\delta(\tau - \tau_{m,i})$$

wherein for the multipath components

$$\tau_m \geq \tau_0 \qquad \text{for } m > 0$$

The direct path arriving at absolute time $\tau_{0,i}$, and the baseband signal amplitudes $a_{m,i}$ are complex, including the phase of the arriving signal. The channel may introduce attenuation and/or constructive/destructive interference of the set of signals so that the magnitudes of the resultant amplitudes $a_{m,i}$ of the direct path and multipath components may be different at the different ports.

The resultant signals (direct path and multipath components) for each port arrive at the receiver at times $T_{m,i}$ in the timebase of the local receiver clock, which may have an unknown offset compared to absolute time and with respect to the transmitter clock. For each port $i$ the receiver measures the Time of Arrival of the earliest signal, $t_i$, in the time-base of the local receiver clock. These measurements might be of the direct path, or of any other path, or another value resulting from the vector combination of the direct and multipath components, depending on the propagation channel for that port. The actual time of arrival for this port will have been $T_i$, but the measurements of each port are uncertain, because of the possible effects of noise and errors in the receiver chain. We assume that for each port the observed measurement $t_i$ follows a gaussian distribution with mean $T_i$ (unknown) and standard deviation $\sigma_i$.

From the set of $N$ measurements $t_i$ for the $N$ ports we address the challenge for the receiver to estimate the actual Time of Arrival of the first-arriving path at the receiver, $\hat{T}$, in the time-base of the local clock, i.e. the "presumed earliest signal resultant". We attempt to estimate the earliest of the actual time of arrivals for the set of ports as a whole, that is we wish to estimate $\hat{T} = min(T_i)$. We make no attempt here to estimate the Time of Arrival of later signals or multipath components. If the direct path is not received and measured by any of the ports, then we will estimate and report the earliest of the measured multipath components.

The conditions with which we are concerned are when the time difference between the multipath components is less than the uncertainty of the individual Time of Arrival measurements, that is, we have close-in multipath conditions. In these conditions we do not know what multipath components are measured by which port (the channel conditions for the ports are unknown), and that - as will be shown below - the port with the earliest ToA measurement is not necessarily the port which had the earliest actual Time of Arrival (because of the possibility of noise and errors affecting each measurement).

In this exemplary embodiment, no account is taken of the particular characteristics of the multipath environment, other than that the underlying value to be estimated is the minimum. The advantage of this is that the method might readily be applied in many practical applications (particularly with close-in multipath) in which underlying statistical information is not available or is difficult to model with any confidence.

The weighted mean and the 'first' metrics

As a starting point, consider that we could estimate the Time of Arrival using the weighted mean metric, or take the first time of arrival. These are summarised and compared in the table 1 below. The suitability column indicates the multipath conditions under which the metric is useful.

Table 1

| Metric | Equation | Expected bias | Suitability |
|---|---|---|---|
| Weighted mean | $$\bar{T} = \frac{\dfrac{t_1}{\sigma_1^2} + \dfrac{t_2}{\sigma_2^2}}{\dfrac{1}{\sigma_1^2} + \dfrac{1}{\sigma_2^2}}$$ | Has a positive, delay bias compared to the first measurement $E[\,\bar{T}\,] > t'$ | When the two measurements are close together, and they are likely to be of the same signal path |
| First | $T' = t'$ | Has a negative, early bias compared to the first measurement $E[T'\,] < t'$ | When the first measurement is significantly earlier than the second, and they are likely to be of different signal paths |

The characteristics of the weighted mean as a metric are well known, and this metric is excellent for estimating the value of a variable with symmetrical error distribution. According to the disclosure, the two measurements are combined, preferably weighted in proportion to the inverse of their uncertainty. It has been found that the result is more precise than either of the individual measurements, and its mean lies between the measurements. Therefore under multipath conditions its use introduces a positive delay bias if the measurements are from different paths.

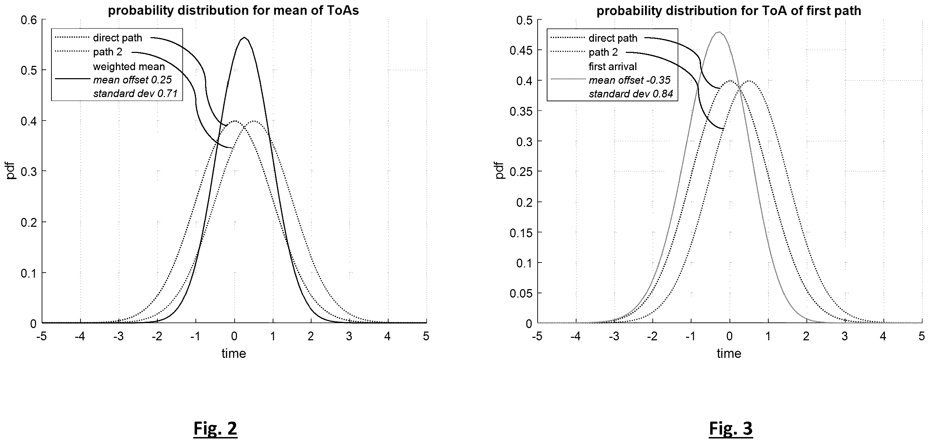

An example with close-in multipath is shown in Fig. 2. In this example we have two ports, one of which happens to be measuring the direct path, and one a multipath component "path 2", which has equal amplitude, equal measurement uncertainty, and is arriving 0.5 arbitrary time units later. (The time units depends on the application - for UWB they might be nanoseconds.) This is an example of close-in multipath, in which it can be seen that the time separation of the two signal paths is less than the measurement uncertainty, and that the probability density functions for the measurements of the two signals have substantial overlap.

The "first" metric is as such known to the skilled person and may for example be used in receivers to select between measurements. If the measurements are clearly different then naturally the first measurement may be selected, as it has probably the earliest Time of Arrival and is most likely to be the direct path. Under multipath conditions a measurement that is much later is likely to be reflection, and (in this example) contributes no information.

However, when we have close-in multipath conditions the time between the measurements can be smaller than the uncertainty of the measurements themselves. Then it is important to realise, as noted in the above table, that the observed measurement of the time of arrival is likely to be an early estimate of the true value. This is illustrated in Fig. 3, for the same channel conditions as above.

Looking in more detail for this metric, consider the two different sets of paths, arriving at two receiver antenna ports A and B, nominally (in the time base of the receiver clock) at times $T_A = 0$ and time $T_B = 0.5$ respectively. The measurements however are not perfect, but each have a certain spread, in this example with a standard deviation of $\sigma_i = 0.5$, giving rise to a probability density function for the measurements, as shown.

The measurement from port A which in this case experiences the path at time $T_A = 0$, has a certain distribution, with pdf > 0.25 from -1 to +1 as shown labelled "direct path".

The measurement from port B which in this case experiences the path nominally at time $T_B = 0.5$, also has a probability distribution, here with a pdf > 0.25 from -0.5 to +1.5, as shown labelled "path 2"

The measurement of port B, although nominally later, because of the uncertainty in the measurement can possibly be measured as an earlier value, and indeed its measurement can be earlier than the measurement of port A. The earliest measurement might then be from port B, rather than from port A. In other words and to emphasise the point, in close-in multipath conditions it is not necessarily the case that the port with the earliest-arriving signal corresponds to the port with the earliest ToA measurement by the receiver. The resulting pdf for the earliest of the two measurements made by the receiver of the signals at the two ports is then as shown in the solid line in Fig. 3: it is earlier than either of the ports on their own, and has a negative, early bias offset.

The probability density function for the "first" of two measurements is given by the relation

$$p'(t) = p_1(t)[1 - c_2(t)] + p_2(t)[1 - c_1(t)]$$

in which $p_i(t)$ and $c_i(t)$ are the probability and cumulative density functions for the measurements at the $i$th port. Intuitively it can be understood as the probability that the value is at time $t$ is the probability of its measurement by port $i$, that is $p_i(t)$, subject to the condition that the value has not already probably been measured by the other port $j$, that is $[1 - c_j(t)]$. This may occur for each port $i$.

Combining to form a balanced estimator

In this example embodiment, the two metrics are combined by weighting them, so that the positive (delay) bias of the weighted mean metric, may be balanced by the negative (early) bias of the 'first' metric, as follows:

$$\hat{T} = w_m \bar{T} + w_f T' \qquad \text{in which} \qquad w_m + w_f = 1.$$

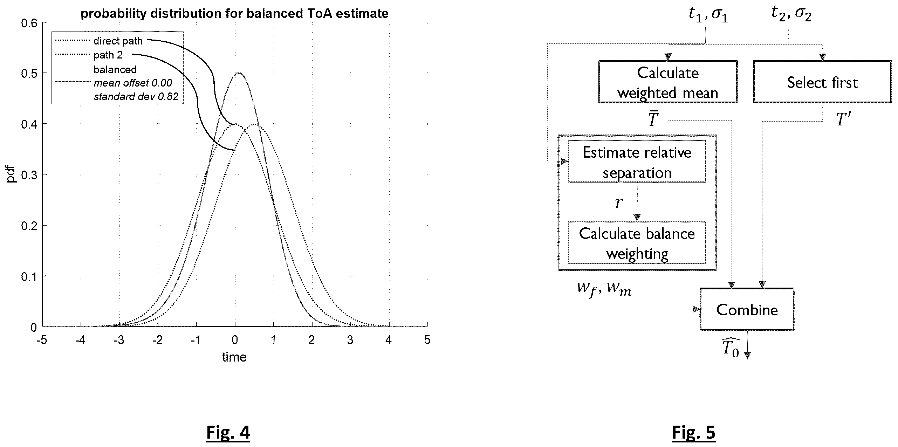

This combination of the two metrics is illustrated in Fig. 4, showing the cancellation of the positive and negative bias, together with an improvement in precision.

Choice of weightings

It is found that the appropriate emphasis to give to the mean or to the "first" metric depends on the relative separation between the measurements - their separation in time compared to their measurement uncertainty. If they are well separated then the "first" metric should be used, while if they are very close, then the mean metric should predominate. The similarity can reasonably be defined by the ratio $r$ of the separation, compared to the sum of the uncertainty variances of the two measurements:

$$r = \frac{|t_2 - t_1|}{2\sqrt{\sigma_2^2 + \sigma_1^2}}$$

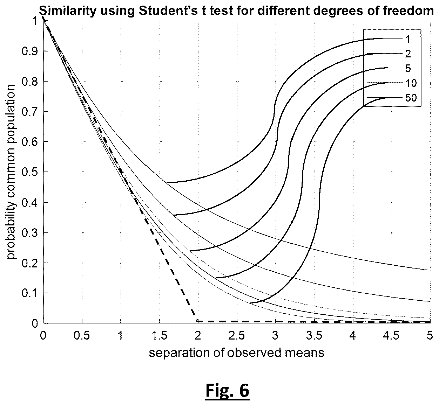

In fact, it is found that by analogy the weighting can be chosen depending on an assessment that the measurements are likely to be of the same population, or different populations - i.e., whether the two measurements are from the same path (the direct path), or the measurements A and B are from different propagation paths (the direct path and a second path). A statistical method of assessing whether two samples are from the same underlying population is the "Student's t test", which is as such known to the skilled person, which we can use for the purposes of illustration. Assuming the measurement errors have a gaussian distribution we can then regard the probability $P_s$ of the two sets of measurements as coming from the same population as the graph shown in Fig. 6, and then weight the two metrics according to $w_m = P_s$, $w_f = 1 - P_s$, to provide the balanced estimator.

The dotted line of Fig. 6 may be used as a simple approximation, wherein

$$w_m = 1 - r, \qquad w_f = r \qquad \text{for } r < 1$$

$$w_m = 0, \qquad w_f = 1 \qquad \text{for } r \geq 1$$

Measurement uncertainty

An assumption made in this exemplary embodiment is that the uncertainty of each measurement is known to the processing. This is not a new requirement, as it may be assumed already for example in the estimation of the weighted mean. The actual value of the uncertainty is not particularly critical, but it does influence the weighting of different measurements. Its effect is that measurements with a small uncertainty have a greater influence on the result.

The uncertainty of the measurement may arise from noise in the receiver amplifiers, from phase noise in the local oscillator, and/or amplitude and timing quantization in the ADC. A limit to the uncertainty is set by the bandwidth of the transmitted signal, and the bandwidth of the filtering in the receiver.

The measurement uncertainty may be estimated by the receiver from the signal to noise ratio of the input, and the receiver design. In many systems a number of measurements may be performed, for example of a set of pulses, in which case the measurement uncertainty can be estimated from the variability spread of such a set of measurements.

The uncertainty of the output may also be estimated, together with the balanced estimate. This may be useful for subsequent processing - particularly if a number of measurements are being combined, but also for the further use of the ToA estimate by the application.

The standard deviation (or other statistics) for the output can be calculated from knowledge of the probability and cumulative density function for the "first" metric, as discussed above.

As can be seen from the simulation results discussed below, the standard deviation can also readily be approximated as a combination of that for the weighted mean, and the first measurement, for example:

$$\hat{\sigma}^2 = w_m^2 \sigma_{1,2}^2 + w_f^2 \sigma'^2_1$$

The full calculation may include the variability of the "first" metric, rather than that of the measurement which came first, $\sigma'^2_1$, and may be more accurate for close measurements, but this approximation is probably an adequate working assumption. When the measurements are relatively close then the uncertainty may be improved by the contribution of the second measurement, and when they are far apart the balanced estimator may be dominated by the "first" measurement and its uncertainty.

Simulation results

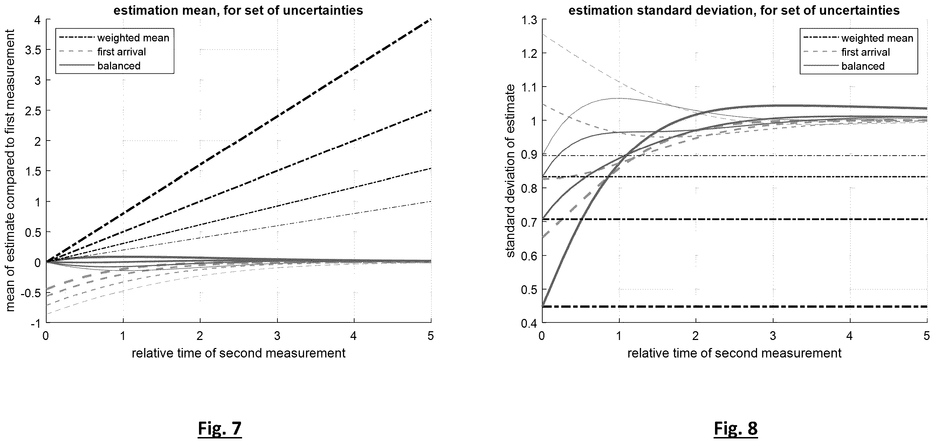

Simulation results are shown in Figs. 7 and 8. They illustrate the behaviour of the balanced estimator, by showing the bias and uncertainty for the balanced estimator (using the Student's t test with N=3) for a range of time offsets between the measurements, and a set of uncertainty values (1 for the measurement by port A, and {0.5, 1, 1,5, and 2} with decreasing linewidth, for the measurement by port B.

The curves illustrate that balanced method has approximately zero bias over the full range of time offsets and spreads, while the bias offset for the "first" metric is early when the measurements are close (and increases with measurement uncertainty), and the late bias offset for the weighted mean metric increases with separation (decreasing according to the uncertainty of the second measurement).

Meanwhile, the estimation uncertainty of the balanced metric is improved when the measurements are close in time, eventually to correspond to that of the weighted mean of the measurements. As the time offset between the measurements increases the uncertainty in the balanced estimate tends to that of the first measurement (unity in this example). It can be seen that the uncertainty given by the "first" metric can be large when the second measurement is close in time and uncertain. Advantageously, the "first" metric plays little role in the balanced estimator under these circumstances.

More than two measurements

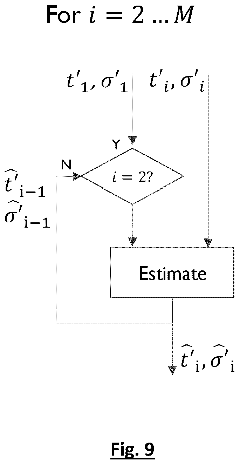

A simple method of handling a number of measurements according to the principles described above, is to again arrange the measurements (together with their associated uncertainties) in time order, and then successively combine the set of measurements. A flowchart is shown in Fig. 9.

The first combination is the balanced estimator for the earliest two measurements, to provide a first balanced estimator. Successive measurements for $i = 3 \ldots M$ are then balanced estimations of the previous balanced estimate together with the next measurement in the sequence, with time $t'_i$ and uncertainty $\sigma'_i$. After all the successive measurements have been combined we have the result $\hat{T} = \widehat{t'}_M$.

In this successive approach the uncertainty of the balanced estimation $\hat{\sigma}'_i$ may be estimated as input for the next cycle.

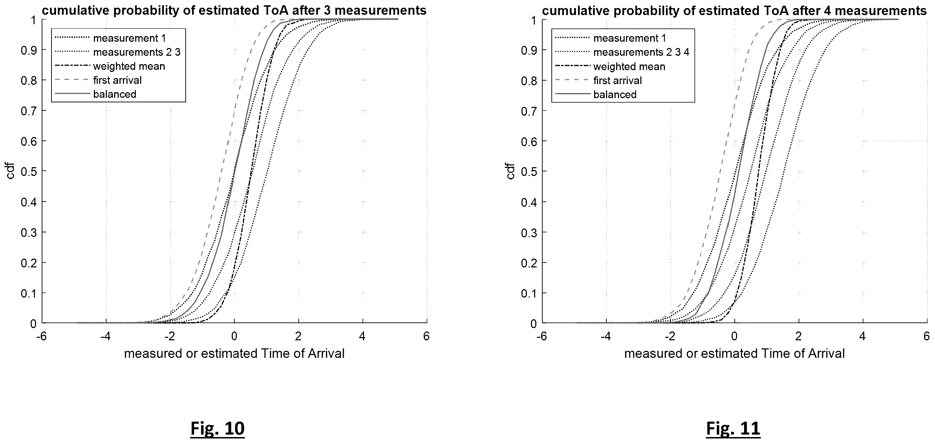

The process is illustrated by the plots shown in Figs. 10 and 11, showing the addition of a third and then a fourth measurement, which progressively increase the average bias of the weighted mean, cause a slightly earlier bias in the "first" metric (because of the chance of an early measurement from the nominally later measurements), but through which the bias of the balanced estimator remains close to zero.

**Exemplary embodiment 2**

Example weighting curve

For further illustration, consider resultant signals $T_i$ arriving at two ports, $i = \{1,2\}$. These are measured by the receiver to give a measurement $t_i$ for each port, and because of the noise, uncertainties and tolerances in the receiver the measurement in each port will be inaccurate, with an uncertainty of standard deviation $\sigma_i$.

In the balanced estimation approach the mean of the measurements $\overline{T}$ and the "first" or "presumed earliest" of the measurements $T$ is selected. The difference between the two time measurements is calculated, which may be defined as $\Delta t = |t_1 - t_2|$.

The two metrics, the (weighted) mean and the "first", are then combined together, in a manner that depends on the measured difference:

$$\hat{T} = w_m \overline{T} + w_f T' \text{ in which } w_m + w_f = 1.$$

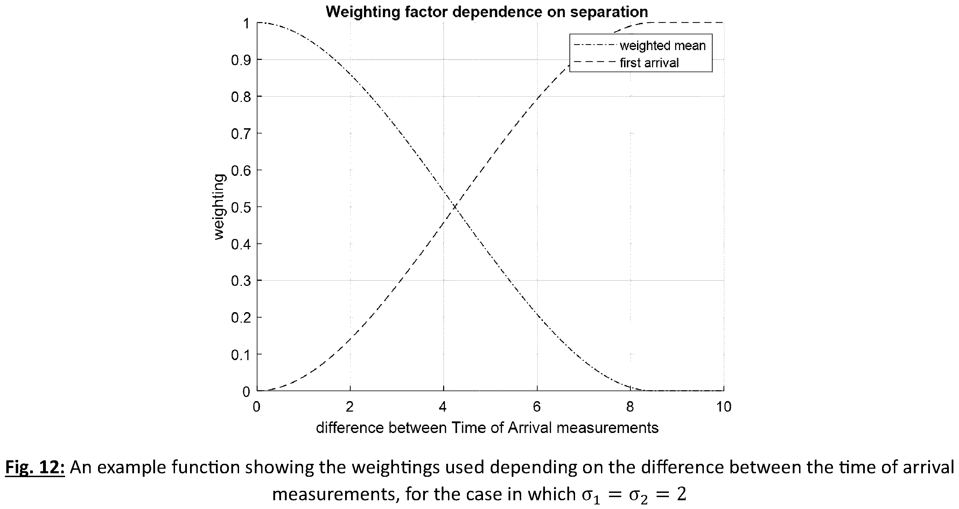

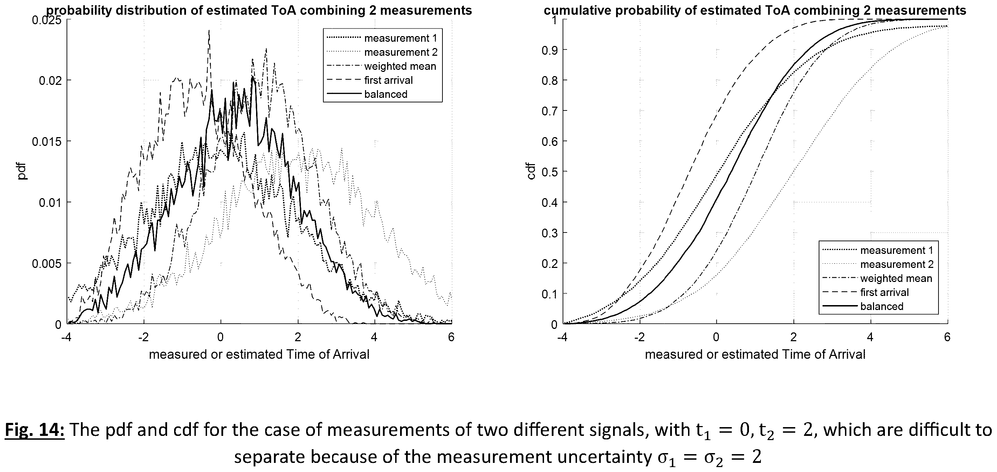

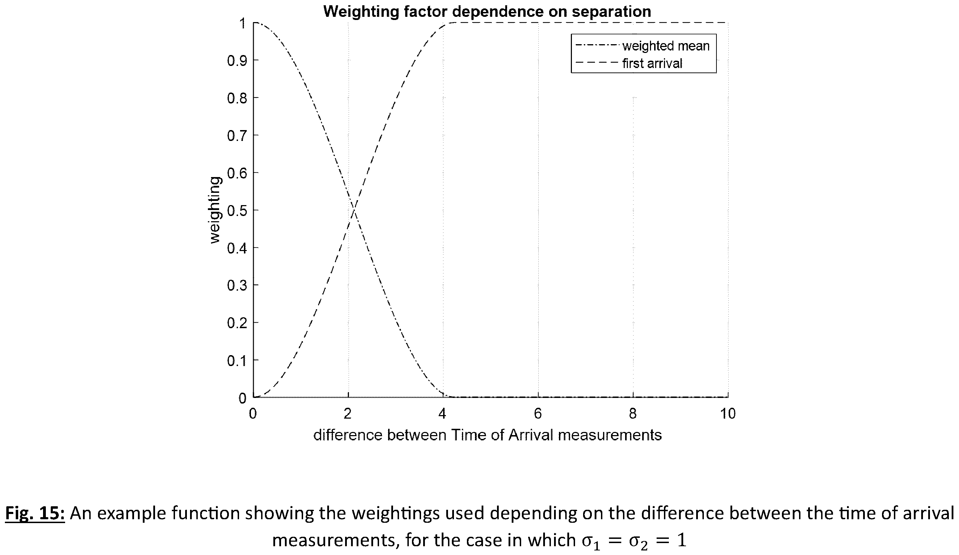

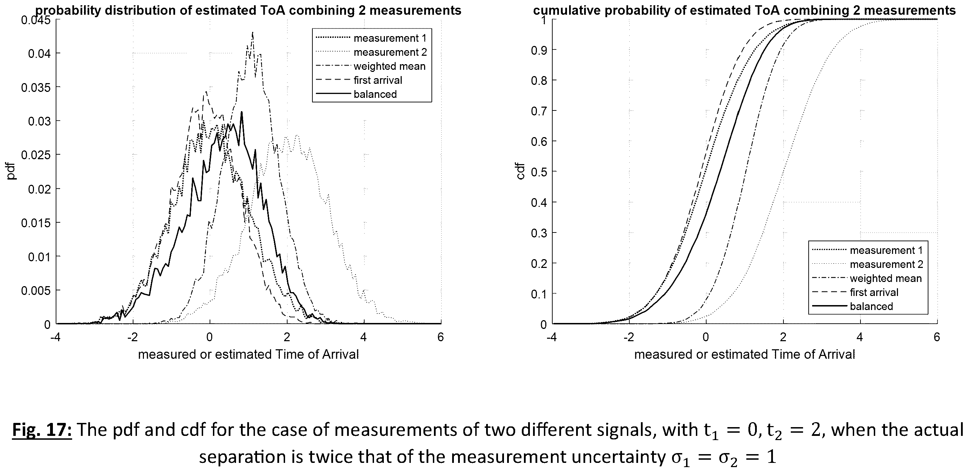

The use of example pairs of weightings, $w_m$ for the mean and $w_f$ for the first, are shown in Figs. 12-17. Figures 12 and 15 show the use of a cubic spline to smoothly progress between zero and one over a range of difference between the measurements of the Time of Arrival of two ports. This is shown firstly in Fig 12 when the two measurements have an uncertainty of 2 units, and then in Fig 15 when they have a smaller measurement uncertainty, of 1 unit.

The range for this variation should preferably relate to the uncertainties in the measurements and may be empirically optimized. An example is for the weightings to progress between zero and one over a range of $\psi$, in which $\psi$ is given by:

$$\psi^2 = \sigma_1^2 + \sigma_2^2$$

The uncertainty in each measurement may vary - for example according to the signal strength - so in practice rather than adapting the x-axis of the above curve according to $\psi$ the measured distance may be normalized according to the estimated uncertainty, and the normalized value $\frac{\Delta t}{\psi}$ used as an input to a constant curve.

Examples with combination

The curves of Figs. 12-17 show the weighting curve, and the probability density function and cumulative density function for simulations showing the behaviour of the measurement process according to this exemplary embodiment.

For explanation two cases are illustrated: for two signals that are actually incident at the two receiver ports at the same time (although their measurement is subject to uncertainty) and for two signals that are separated in time by 2 units (e.g. ns). We consider firstly in Figs 12 -14 the case in which the measurement uncertainty is also of 2 units, and then in Figs 15 - 17 the case in which there is a smaller measurement uncertainty.

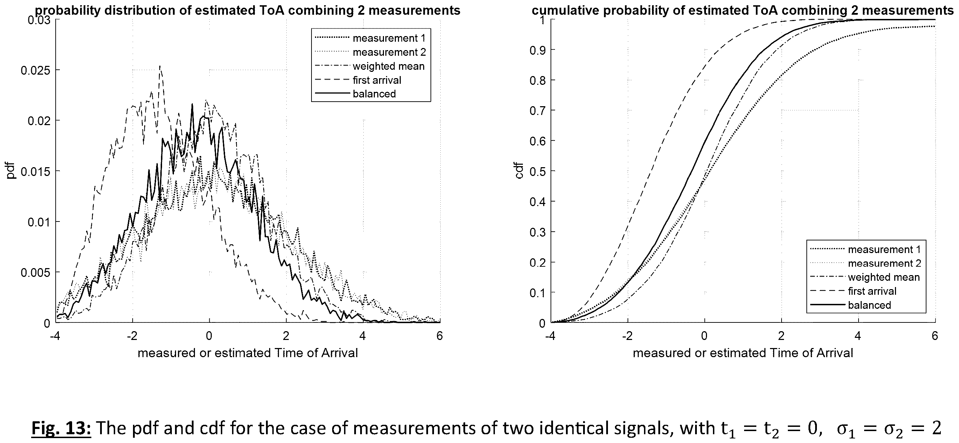

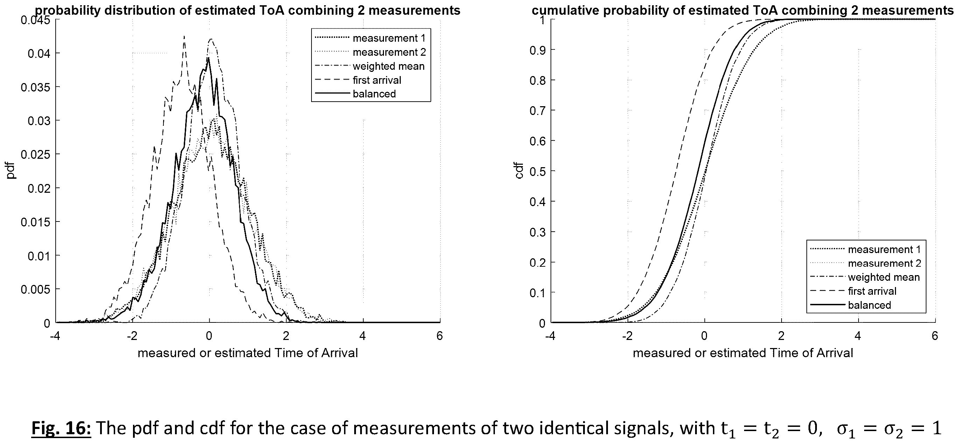

The probability distributions are accumulated and plotted for each of the measurements, $t_1$ and $t_2$, and for the estimates for the mean, $\overline{T}$, the first of the measurements $T'$, and the proposed combination $\hat{T}$. Note that for the cases when the two signals are actually incident at the same time, Fig 13 and Fig 16, the cumulative density function (cdf) curves for the measurements on the two ports 1 and 2 are the same and are superimposed one on the other.

The plots show that in this case when the uncertainty is halved, it is easier for the receiver to resolve measurements, and the weighting factor is over half the range. The overall effect is then that the proposed ToA estimation $\hat{T}$ is reasonably balanced, over a range of signal and measurement cases

**Exemplary Embodiment 3**

A further exemplary embodiment combines one port measurement of time of arrival (for example for round trip time), and another port measurement of distance (for example measuring phase with respect to an oscillator acting as timing reference and using HADM to estimate the round trip distance). These measurements may be combined by scaling by the speed of light and subsequently applying a combination of a presumed earliest measurement metric and a mean metric, to obtain a balanced estimate.

For example, for measuring round trip time device B may contain a receiver that estimates the time of arrival of a signal (measured in multiple ports, relative to a timing reference) from device A, and then device B may transmit a signal with a known time relative to the timing reference, which is in turn measured by device A (with respect to its timing reference). The transmit times and the measurement times (relative to the timing reference) are then combined to estimate the distance (with the timing reference offsets cancelling each other out), so that actually the timing reference offsets may be ignored.

An exemplary system may comprise a UWB transceiver (for doing pulse time of arrival) and a narrow band assistance radio, which hops over multiple frequencies (and can perform HADM phase measurements). These operate on slightly different frequency bands.

So this embodiment may exploit the combination of time of arrival measurements, and the combination of distance measurements, and further the combination of at least one time measurement and at least one distance measurement together.

**Further embodiments**

Further embodiments are formalized in the following clauses.

Clause 1. A computer-implemented method for estimating a Time of Arrival, ToA, of a received signal communicated between two wireless systems in a close-in multipath environment, wherein at least one signal is transmitted from a first of the wireless systems and signal resultants are received on a second of the wireless systems via different ports, the method comprising:

obtaining a set of ToA measurements on the signal resultants with respect to a timing reference;
determining an aggregation-based metric based on an aggregation of the set of ToA measurements;
determining a selection-based metric based on a selection of a presumed earliest ToA measurement among the set of ToA measurements;
determining an overall ToA estimate based on a combination of the aggregation-based metric and the selection-based metric.

Clause 2. The method according to clause 1, wherein the aggregation-based metric is an average, mean, weighted mean, mode, or median of the set of ToA measurements

Clause 3. The method according to clause 1 or 2, wherein the presumed earliest measurement is selected based on one of the following parameters of the signal resultants: peak amplitude, point of crossing a threshold, phase with respect to the timing reference.

Clause 4. The method according to any one of clauses 1-3, wherein the overall ToA estimate is determined based on a weighted combination of the aggregation-based metric and the selection-based metric.

Clause 5. The method according to clause 4, wherein the method comprises determining or defining a measurement uncertainty for each ToA measurement and wherein the weighted combination is weighted based on said measurement uncertainties.

Clause 6. The method according to clause 5, wherein the aggregation-based metric is given more weight for higher measurement uncertainties and the selection-based metric is given more weight for lower measurement uncertainties.

Clause 7. The method according to any one of clauses 4-6, wherein the method comprises determining a relative separation between said signal resultants and wherein the weighted combination is weighted based on said relative separation.

Clause 8. The method according to claim 7, wherein the aggregation-based metric is given more weight for smaller relative separations and the selection-based metric is given more weight for larger relative separations.

Clause 9. The method according to any one of clauses 1-8, wherein the step of determining the overall ToA estimate comprises determining a function of the aggregation-based metric and the selection-based metric that takes into account the relative separation between the ToA measurements and their measurement uncertainties.

Clause 10. The method according to clause 9, wherein the function comprises a ratio of the relative separation between the ToA measurements to the sum of their measurement uncertainties.

Clause 11. The method according to any one of clauses 1-10, wherein the method assumes that measurement errors in the receiver system follow a Gaussian distribution and wherein the standard deviation of the measurement errors is used to estimate measurement uncertainties of the ToA measurements.

Clause 12. The method according to any one of clauses 1-11, wherein the transmitted signal is an UWB signal, a Bluetooth signal, an ISM band signal, a cellular signal, or a GNSS signal.

Clause 13. The method according to any one of clauses 1-12, wherein the transmitted signal is a predetermined ranging signal, such as a known signal pattern or a known pulse shape.

Clause 14. A computer-implemented method for estimating a distance based on a received signal communicated between two wireless systems in a close-in multipath environment, wherein at least one signal is transmitted from a first of the wireless systems and signal resultants are received on a second of the wireless systems via different ports, and/or vice versa, the method comprising:

obtaining a set of distance measurements on the signal resultants;
determining an aggregation-based metric based on an aggregation of the set of distance measurements;
determining a selection-based metric based on a selection of a presumed shortest distance measurement among the set of distance measurements;
determining an overall distance estimate based on a combination of the aggregation-based metric and the selection-based metric.

Clause 15. The method according to clause 14, wherein the aggregation-based metric is an average, mean, weighted mean, mode, or median of the set of distance measurements

Clause 16. The method according to clause 14 or 15, wherein the distance measurements are based on detection of one of the following parameters of the signal resultants: round trip time of arrival, round trip HADM using a set of phase measurements.

Clause 17. The method according to any one of clauses 14-16, wherein the overall distance estimate is determined based on a weighted combination of the aggregation-based metric and the selection-based metric.

Clause 18. The method according to clause 17, wherein the method comprises determining or defining a measurement uncertainty for each distance measurement and wherein the weighted combination is weighted based on said measurement uncertainties.

Clause 19. The method according to clause 18, wherein the aggregation-based metric is given more weight for higher measurement uncertainties and the selection-based metric is given more weight for lower measurement uncertainties.

Clause 20. The method according to any one of clauses 17-19, wherein the method comprises determining a relative separation between said signal resultants and wherein the weighted combination is weighted based on said relative separation.

Clause 21. The method according to claim 20, wherein the aggregation-based metric is given more weight for smaller relative separations and the selection-based metric is given more weight for larger relative separations.

Clause 22. The method according to any one of clauses 14-21, wherein the step of determining the overall distance estimate comprises determining a function of the aggregation-based metric and the selection-based metric that takes into account the relative separation between the distance measurements and their measurement uncertainties.

Clause 23. The method according to clause 22, wherein the function comprises a ratio of the relative separation between the distance measurements to the sum of their measurement uncertainties.

Clause 24. The method according to any one of clauses 14-23, wherein the method assumes that measurement errors in the receiver system follow a Gaussian distribution and wherein the standard deviation of the measurement errors is used to estimate measurement uncertainties of the distance measurements.

Clause 25. The method according to any one of clauses 14-24, wherein the transmitted signal is an UWB signal, a Bluetooth signal, an ISM band signal, a cellular signal.

Clause 26. The method according to any one of clauses 14-25, wherein the transmitted signal is a predetermined ranging signal, such as a known signal pattern or a known pulse shape.

Clause 27. A computer-implemented method for estimating a Time of Arrival, ToA, or a distance between two wireless systems, based on a received signal communicated between the two wireless systems in a close-in multipath environment, wherein at least one signal is transmitted from a first of the wireless systems and signal resultants are received on a second of the wireless systems via different ports, and wherein the method comprises steps according to any one of clauses 1-13 and/or steps according to any one of clauses 14-26.

Clause 28. A receiver system comprising a processing unit configured for executing the method of any one of clauses 1-27.

Clause 29. A computer program product comprising a non-transitory computer-readable medium having instructions stored thereon, which when executed by a processing unit, cause the processing unit to perform the method according to any one of the clauses 1-27.

## Claims

1. A computer-implemented method for estimating a Time of Arrival, ToA, or a distance between two wireless systems, based on at least one signal communicated between the two wireless systems (100, 200) in a close-in multipath environment, wherein the at least one signal is transmitted from a first of the wireless systems and signal resultants are received on a second of the wireless systems via different ports (203, 204), the method comprising:

   obtaining a set of measurements on the signal resultants with respect to a timing reference;
   determining an aggregation-based metric based on an aggregation of the set of measurements;
   determining a selection-based metric based on a selection of a presumed earliest measurement among the set of measurements;
   determining an overall ToA estimate or an overall distance estimate based on a combination of the aggregation-based metric and the selection-based metric.

2. The method according to claim 1, wherein the aggregation-based metric is an average, mean, weighted mean, mode, or median of the set of measurements.

3. The method according to any one of the preceding claims, wherein the distance estimate is determined based on a weighted combination of the aggregation-based metric and the selection-based metric.

4. The method according to claim 3, wherein the method comprises determining or defining a measurement uncertainty for each measurement and wherein the weighted combination is weighted based on said measurement uncertainties.

5. The method according to claim 4, wherein the aggregation-based metric is given more weight for higher measurement uncertainties and the selection-based metric is given more weight for lower measurement uncertainties.

6. The method according to any one of claims 3-5, wherein the method comprises determining a relative separation between said measurments and wherein the weighted combination is weighted based on said relative separation.

7. The method according to claim 6, wherein the aggregation-based metric is given more weight for smaller relative separations and the selection-based metric is given more weight for larger relative separations.

8. The method according to any one of the preceding claims, wherein the step of determining the distance estimate comprises determining a function of the aggregation-based metric and the selection-based metric that takes into account the relative separation between the measurements and their measurement uncertainties.

9. The method according to claim 8, wherein the function comprises a ratio of the relative separation between the measurements to the sum of their measurement uncertainties.

10. The method according to any one of the preceding claims, wherein the method assumes that measurement errors in the receiver system follow a Gaussian distribution and wherein the standard deviation of the measurement errors is used to estimate measurement uncertainties of the measurements.

11. The method according to any one of the preceding claims, wherein the measurements are ToA measurements and/or distance measurements.

12. The method according to any one of the preceding claims, wherein in the transmitted signal is an UWB signal, a Bluetooth signal, an ISM band signal, a cellular signal, or a GNSS signal.

13. The method according to any one of the preceding claims, wherein the transmitted signal is a predetermined ranging signal, such as a known signal pattern or a known pulse shape.

14. A receiver system comprising a processing unit (205) configured for executing the method of any one of the preceding claims.

15. A computer program product comprising a non-transitory computer-readable medium having instructions stored thereon, which when executed by a processing unit, cause the processing unit to perform the method according to any one of the claims 1-13.

**Fig. 1**

Transmitter 100 — carrier, modulation, $T_T$, $\tau_T$

Receiver 200 — 201, 202, noise, filter, measure $t_1$ 203, measure $t_2$ 204, estimator 205, $\hat{T}$

range

Direct, leading path, at $\tau_0$

Multipath components, at $\tau_m$

**probability distribution for mean of ToAs**

Legend:
- direct path
- path 2
- weighted mean
- *mean offset 0.25*
- *standard dev 0.71*

**Fig. 2**

**probability distribution for ToA of first path**

Legend:
- direct path
- path 2
- first arrival
- *mean offset -0.35*
- *standard dev 0.84*

**Fig. 3**

**Fig. 4**

**Fig. 5**

EP 4 764 604 A1

Fig. 6

Fig. 8

Fig. 7

For $i = 2 \dots M$

$$t'_1, \sigma'_1 \qquad t'_i, \sigma'_i$$

$\widehat{t'}_{i-1}$

$\widehat{\sigma'}_{i-1}$

N

Y

$i = 2?$

Estimate

$\widehat{t'}_i, \widehat{\sigma'}_i$

**Fig. 9**

Fig. 11

Fig. 10

**Fig. 12:** An example function showing the weightings used depending on the difference between the time of arrival measurements, for the case in which $\sigma_1 = \sigma_2 = 2$

**Fig. 13:** The pdf and cdf for the case of measurements of two identical signals, with $t_1 = t_2 = 0$, $\sigma_1 = \sigma_2 = 2$

**Fig. 14:** The pdf and cdf for the case of measurements of two different signals, with $t_1 = 0, t_2 = 2$, which are difficult to separate because of the measurement uncertainty $\sigma_1 = \sigma_2 = 2$

EP 4 764 604 A1

**Fig. 15:** An example function showing the weightings used depending on the difference between the time of arrival measurements, for the case in which $\sigma_1 = \sigma_2 = 1$

**Fig. 16:** The pdf and cdf for the case of measurements of two identical signals, with $t_1 = t_2 = 0$, $\sigma_1 = \sigma_2 = 1$

**Fig. 17:** The pdf and cdf for the case of measurements of two different signals, with $t_1 = 0$, $t_2 = 2$, when the actual separation is twice that of the measurement uncertainty $\sigma_1 = \sigma_2 = 1$

Europäisches
Patentamt
European
Patent Office
Office européen
des brevets

# EUROPEAN SEARCH REPORT

**Application Number**

EP 24 22 3057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/077523 A1 (CHOWDHURY MAINAK [US] ET AL) 16 March 2023 (2023-03-16) * paragraph [0011] - paragraph [0019] * * paragraph [0030] - paragraph [0068] * * figures 1-4 * * abstract * | 1-15 | INV. G01S11/02 G01S19/22 |
| X | US 2019/373595 A1 (SADIQ BILAL [US] ET AL) 5 December 2019 (2019-12-05) * paragraph [0073] - paragraph [0118] * * claims 1-30 * * abstract; figures 1-9 * | 1,2, 11-15 | |
| A | US 2018/284215 A1 (PENG MENGKANG [GB]) 4 October 2018 (2018-10-04) * the whole document * | 1-15 | |

|  |
|---|
| **TECHNICAL FIELDS SEARCHED (IPC)** |
| G01S |

The present search report has been drawn up for all claims

| Place of search | Date of completion of the search | Examiner |
|---|---|---|
| Munich | 19 May 2025 | Galmiche, Aurélien |

EPO FORM 1503 03.82 (P04C01)

# EP 4 764 604 A1

## ANNEX TO THE EUROPEAN SEARCH REPORT
## ON EUROPEAN PATENT APPLICATION NO.

EP 24 22 3057

19-05-2025

| Patent document cited in search report | Publication date | Patent family member(s) | | Publication date |
|---|---|---|---|---|
| US 2023077523 A1 | 16-03-2023 | EP | 4232839 A1 | 30-08-2023 |
| | | JP | 7487417 B2 | 20-05-2024 |
| | | JP | 7667897 B2 | 23-04-2025 |
| | | JP | 2023549054 A | 22-11-2023 |
| | | JP | 2024105440 A | 06-08-2024 |
| | | US | 2022128677 A1 | 28-04-2022 |
| | | US | 2023077523 A1 | 16-03-2023 |
| | | US | 2024027596 A1 | 25-01-2024 |
| | | WO | 2022093858 A1 | 05-05-2022 |
| US 2019373595 A1 | 05-12-2019 | CN | 112166624 A | 01-01-2021 |
| | | EP | 3804384 A1 | 14-04-2021 |
| | | US | 2019373595 A1 | 05-12-2019 |
| | | WO | 2019232206 A1 | 05-12-2019 |
| US 2018284215 A1 | 04-10-2018 | CN | 108693501 A | 23-10-2018 |
| | | EP | 3404440 A2 | 21-11-2018 |
| | | KR | 20180111574 A | 11-10-2018 |
| | | US | 2018284215 A1 | 04-10-2018 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **X. LI** ; **K. PAHLAVAN**. Super-Resolution TOA Estimation With Diversity for Indoor Geolocation. *IEEE Transactions on Wireless Communications*, January 2004, vol. 3 (1), 224-234